# EUROPÄISCHE PATENTANMELDUNG

(11) **EP 3 153 423 A1**
(43) Veröffentlichungstag der Anmeldung: **12.04.2017**
(21) Anmeldenummer: 16191096.3
(22) Anmeldetag: 28.09.2016
(51) Int. Cl.: B65D 59/02, F16L 57/00, B65D 85/62

(54) **ROHRKAPPENSATZ UND ANORDNUNG MIT EINEM SOLCHEN**

(30) Priorität: 06.10.2015 DE 102015116961
(71) Anmelder: McAven, Oscar, 22145 Braak (DE)
(72) Erfinder: McAven, Oscar, 22145 Braak (DE)
(74) Vertreter: Stork Bamberger Patentanwälte PartmbB

(57) **Zusammenfassung**

Die vorliegende Erfindung betrifft einen Rohrkappensatz (11) umfassend eine Mehrzahl zum Anordnen an Rohrenden (12) von Rohren (13), zumindest im Wesentlichen gleicher Länge, verschiedenen Rohrdurchmessers ausgebildete und eingerichtete Rohrendkappen (10) gestufter Größen, wobei jede der Rohrendkappen (10) jeweils ein Deckelelement (14) und eine in das jeweilige Rohrende (12) unter Übermaßpassung in axialer Richtung einsteckbar ausgebildete Einsteckhülse (15) umfasst, wobei ein Übergangsbereich (16) zwischen dem Deckelelement (14) und der Einsteckhülse (15) ein Gegenlageelement (17) aufweist, das angepasst ist, im eingeschobenen Zustand der Einsteckhülse (15) mit einer Stirnseite (18) des jeweiligen Rohrendes (12) in Anlage zu kommen. Des Weiteren betrifft die Erfindung eine Anordnung umfassend eine solchen Rohrkappensatz (11).

## Beschreibung

Die vorliegende Erfindung betrifft einen Rohrkappensatz. Des Weiteren betrifft die Erfindung eine Anordnung umfassend einen derartigen Rohrkappensatz.

Aus Gründen der besseren Transportierbarkeit werden Rohre in der Regel in relativ kurzen Längen in den Handel gegeben. Am Montageort werden diese Rohrabschnitte durch die aus dem Stand der Technik hinlänglich bekannten Verfahren zum Verbinden von Rohren zu Rohrleitungen der jeweils gewünschten Gesamtlänge zusammengesetzt.

Um die Rohrleitungen beim Transport vor Beschädigung und Verschmutzung zu schützen, werden die Rohrenden gewöhnlich mit Rohrendkappen, beispielsweise aus einem elastischen Kunststoffmaterial, versehen. Eine solche Rohrendkappe geht beispielsweise aus dem Dokument DE 36 19 299 C2 hervor.

Nachteilig ist, dass die bekannten Rohrendkappen ausschließlich zum Schutz jeweils eines Rohres vorgesehen sind. Bislang werden Rohre zum Transport jeweils einzeln mit den genannten Rohrendkappen versehen und anschließend zum Montageort transportiert. Die so zum Transport mit den Rohrendkappen versehenen Rohre benötigen daher ein vergleichsweise großes Transportvolumen.

Es ist daher Aufgabe der vorliegenden Erfindung, einen Rohrkappensatz vorzuschlagen, der einerseits als zuverlässiger Schutz vor Verschmutzungen dient und zugleich eine platzsparende Möglichkeit des Transportes mehrerer Rohre ermöglicht. Des Weiteren besteht die Aufgabe darin, eine entsprechende Anordnung vorzuschlagen.

Die Aufgabe wird durch eine Anordnung mit den eingangs genannten Merkmalen dadurch gelöst, dass der Rohrkappensatz eine Mehrzahl zum Anordnen an Rohrenden von Rohren verschiedenen Rohrdurchmessers ausgebildete und eingerichtete Rohrendkappen gestufter Größen umfasst, wobei jede der Rohrendkappen jeweils ein Deckelelement und eine in das jeweilige Rohrende unter Übermaßpassung in axialer Richtung einsteckbar ausgebildete Einsteckhülse umfasst, wobei ein Übergangsbereich zwischen dem Deckelelement und der Einsteckhülse ein Gegenlageelement aufweist, das angepasst ist, im eingeschobenen Zustand der Einsteckhülse mit einer Stirnseite des jeweiligen Rohrendes in Anlage zu kommen. Mittels des erfindungsgemäßen Rohrkappensatzes ist es erstmals möglich, mehrere gleichlange Rohre verschiedenen Durchmessers im ineinandergeschobenen Zustand einerseits für den Transport zu sichern und vor Beschädigungen sowie Verschmutzungen zu schützen. Anderseits wird so das benötigte Transportvolumen aufgrund der ineinander schachtelbar ausgebildeten Rohrendkappen auf ein Minimum reduziert und die Transportkosten wesentlich gesenkt.

Die Rohrendkappen sind ferner insbesondere für das Anbringen an Rohrenden von Lüftungsrohren, insbesondere zum Anbringen an Wickelfalzrohren geeignet. Aufgrund der Einsteckhülse, die innenseitig in das Rohrende eingeschoben wird, wird das Rohrende mittels der erfindungsgemäßen Rohrendkappe vollständig verschlossen und eine über den gesamten Umfang radial wirkende homogene Klemmkraftverteilung erzielt, da der bei Wickelfalzrohren bauartbedingt auf der Rohraußenseite vorhandene Falz nicht mit der Einsteckhülse in Kontakt kommt.

Vorzugsweise ist das Gegenlageelement als vollständig umlaufender Steg ausgebildet. So liegt das Gegenlageelement vollflächig auf der jeweiligen Stirnseite des Rohrendes auf. Alternativ kann das Gegenlageelement durch wenigstens einen Steg oder mehrere stegartige Vorsprünge gebildet sein. Weiter bevorzugt wird das Gegenlageelement durch einen radialen Überstand des Deckelelements selbst gebildet.

Eine bevorzugte Ausbildung der Erfindung zeichnet sich dadurch aus, dass die Länge in der axialen Richtung jeweils eines der Übergangsbereiche einer ersten der Rohrendkappen jeweils größer als ein Gesamtüberstand ist, der von einem der Deckelelemente und einem der Übergangsbereiche einer zweiten der Rohrendkappen der jeweils nächst kleineren Größe gebildet ist. Mit anderen Worten sind die Rohrendkappen auf diese Weise ineinander schachtelbar ausgebildet und eingerichtet.

Eine zweckmäßige Ausgestaltung der Erfindung ist dadurch gekennzeichnet, dass die Einsteckhülsen der Rohrendkappen jeder gestuften Größe Außendurchmesser aufweisen, die jeweils mindestens dem Innendurchmesser des entsprechenden Rohrendes entsprechen. Dies bietet den Vorteil, dass die Rohrendkappen innenseitig in die jeweiligen Rohrenden einsteckbar ausgebildet und eingerichtet sind. Durch Wahl des Außendurchmessers, der die Größe des Übermaßes bestimmt, ist im Zusammenspiel mit der Elastizität der Einsteckhülse die Klemmkraft, mit der die Einsteckhülsen unter sattem Sitz in den jeweiligen Rohrenden im eingeschobenen Zustand gehalten werden, einstellbar.

Eine bevorzugte Weiterbildung der Erfindung zeichnet sich dadurch aus, dass die Einsteckhülsen rohrseitig ferner jeweils einen Endabschnitt umfassen, wobei der Endabschnitt zum freien Ende hin sich verjüngend ausgebildet ist. Mit anderen Worten ist der Außendurchmesser des Endabschnitts gegenüber der Einsteckhülse reduziert ausgebildet. Dies bietet auf der einen Seite den Vorteil, dass die Rohrendkappen aufgrund des reduzierten Durchmessers des Endabschnitts besonders komfortabel in die jeweilige Rohrenden einzuführen sind. Aufgrund des verjüngend ausgebildeten Endabschnittskönnen diese klemmfrei in die Rohrenden eingeführt werden. Auf der anderen Seite weist der Endabschnitt auf diese Weise eine Arretier- und Haltefunktion auf, indem der Endabschnitt auf den Außendurchmesser des Rohrendes der nächst kleineren Größe abgestimmt ist, so dass der Endabschnitt mit seiner Innenseite an der Außenseite des Rohrendes der nächst kleineren Größe anliegt.

Gemäß einer weiteren bevorzugten Ausbildung der Erfindung ist das Gegenlageelement durch einen radialen Vorsprung gebildet. Weiter bevorzugt ist der radiale Vorsprung als umlaufender Steg ausgebildet. So wird die Eintauchtiefe der Einsteckhülse auf einen vorgegebenen Wert begrenzt. Die vorgenannten Rohrendkappen sind, insbesondere bei der Herstellung der Rohrendkappe als Formteil, aufgrund der genannten Geometrie einfach und kostengünstig herstellbar.

Eine weitere vorteilhafte Ausbildung der Erfindung zeichnet sich dadurch aus, dass zumindest entlang eines Teilbereichs des Umfangs des Deckelelements ein Laschenelement angeordnet ist. Das erfindungsgemäße Laschenelement vereinfacht die Handhabung der Rohrkappen, insbesondere beim Abnehmen der Rohrendkappen von den Rohrenden.

Eine weitere zweckmäßige Ausbildung der Erfindung ist dadurch gekennzeichnet, dass jede der Rohrendkappen bezüglich einer jeweils mittig durch das jeweilige Deckelelement und der die Längsachse der jeweiligen Einsteckhülse bildende Symmetrieachse symmetrisch ausgebildet sind. Dies gewährleistet eine gleichmäßige Ableitung von auf das Deckelelement von außen einwirkenden Kräften auf die Stirnseite des jeweiligen Rohrendes. Auf diese Weise werden die Stirnseiten der Rohrenden optimal vor Beschädigungen geschützt. Besonders bevorzugt ist insbesondere das Deckelement rotationssymmetrisch ausgebildet und weist zusätzlich das zuvor beschriebene Laschenelement zur komfortablen Handhabung auf.

Gemäß einer weiteren bevorzugten Ausführungsform sind die Rohrendkappen jeweils einstückig ausgebildet. Dies ist insbesondere bei der Herstellung der Rohrendkappen aus Kunststoff von Vorteil, da die Rohrendkappen in einem Arbeitsgang kostengünstig hergestellt werden können.

Des Weiteren wird die Aufgabe durch eine entsprechende Anordnung mit den eingangs genannten Merkmalen gelöst, wobei die Anordnung eine Mehrzahl von ineinandergeschoben angeordneten Rohren verschiedenen Rohrdurchmessers umfasst, wobei die Rohre zumindest im Wesentlichen die gleiche Länge aufweisen und mindestens einen Rohrkappensatz nach einem der Ansprüche 1 bis 8 umfassen, wobei die Rohrendkappen endseitig an den Rohrenden unter Bildung eines Rohrendkappenturmes angeordnet sind. Die sich daraus ergebenden Vorteile sind bereits zuvor im Zusammenhang mit dem erfindungsgemäßen Rohrkappensatz eingehend erläutert worden. Zur Vermeidung von Wiederholungen wird daher auf die entsprechenden Passagen verwiesen. Weiter bevorzugt umfasst die Anordnung jeweils zwei der erfindungsgemäßen Rohrkappensätze, so dass an den ineinandergeschobenen Rohren an beiden Enden jeweils einer der Rohrkappensätze angeordnet ist. Zumindest im Wesentlichen gleicher Länge meint, dass die Rohre jeweils gleichlang sind, oder nur geringfügige Längenunterschiede aufweisen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Ansicht einer erfindungsgemäßen Rohrendkappe,
- Fig. 2: eine Draufsicht mit Blickrichtung auf das Deckelelement der Rohrendkappe,
- Fig. 3: einen Horizontalschnitt der in Figur 2 gezeigten Rohrendkappe,
- Fig. 4: eine vergrößerte Detailansicht des in Figur 3 gezeigten Details A,
- Fig. 5: eine perspektivische Darstellung einer Mehrzahl von ineinandergeschoben angeordneten Rohren,
- Fig. 6: eine Draufsicht mit Blickrichtung auf die Stirnseiten der Rohrenden,
- Fig. 7: einen Schnitt der in Figur 6 gezeigten Draufsicht entlang der Schnittlinie A-A
und
- Fig. 8: eine vergrößerte Detailansicht des in Figur 7 gezeigten Details A.

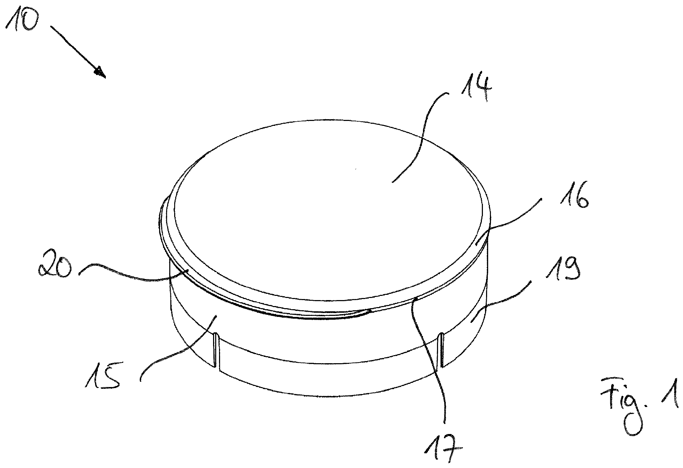

In der Figur 1 ist eine Rohrendkappe 10 in perspektivischer Ansicht gezeigt. Der erfindungsgemäße Rohrkappensatz 11 umfasst eine Mehrzahl der gezeigten Rohrendkappen 10. Die Geometrie der weiteren Rohrendkappen 10 entspricht grundsätzlich der Geometrie der in Figur 1 gezeigten Rohrendkappe 10, jedoch sind diese in der Größe gestuft ausgebildet, um an Rohrenden 12 von Rohren 13 verschiedenen Durchmessers angeordnet zu werden.

Jede Rohrendkappe 10 umfasst jeweils ein Deckelelement 14 und eine Einsteckhülse 15. Die Einsteckhülse 15 ist derart ausgebildet und eingerichtet, dass diese in das jeweilige Rohrende 12 in axialer Richtung, also in Längsrichtung der Rohre 13, einsteckbar ist. Die Dimensionen der Einsteckhülsen 15 sind so gewählt, dass die Einsteckhülse unter Übermaßpassung in das jeweilige Rohrende 12 einsteckbar eingerichtet ist und aufgrund radialer Klemmkräfte in diesem selbsttätig gehalten wird. Vorzugsweise weist die Einsteckhülse 15 ein geringes radiales Übermaß auf, so dass die Einsteckhülse 15 unter elastischer Verformung innenseitig in das Rohrende 12 eingeführt werden kann und so in diesem durch Klemmung gehalten wird.

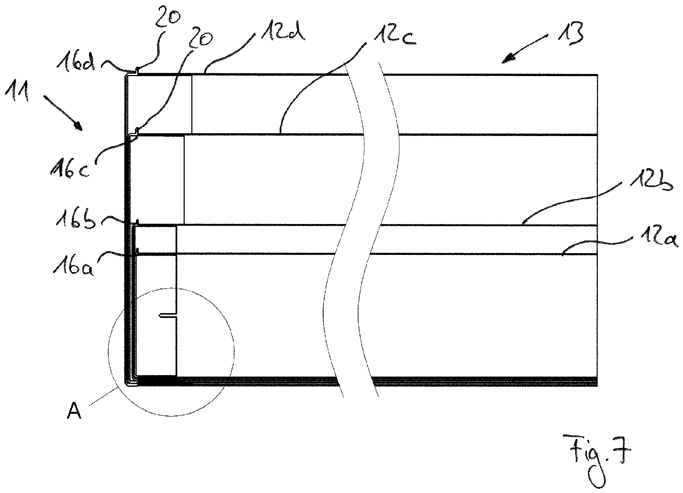

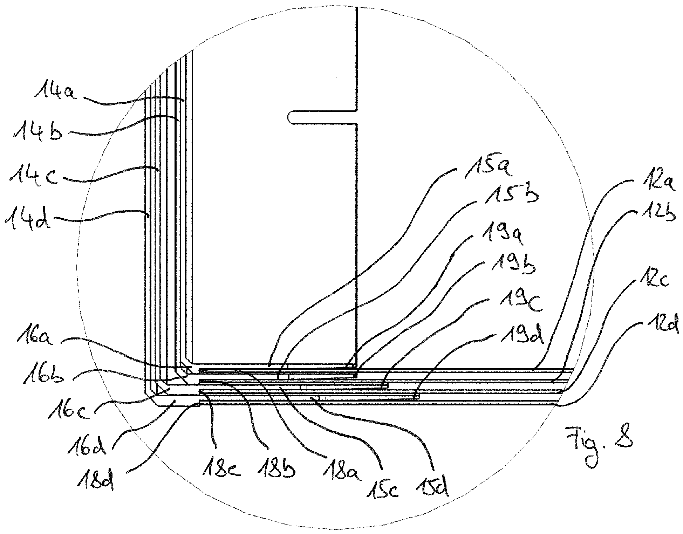

Die Rohrendkappe 10 weist ferner einen Übergangsbereich 16 zwischen dem Deckelelement 14 und der Einsteckhülse 15 auf. Der Übergangsbereich 16 umfasst bzw. bildet ein Gegenlageelement 17. Das Gegenlageelement 17 ist dazu eingerichtet, in dem in den Figuren 7 und 8 gezeigten eingeschobenen Zustand jeweils mit einer Stirnseite 18 des jeweiligen Rohrendes 12 in Anlage zu kommen. Mit anderen Worten ist das Gegenlageelement 17 als Anlageelement ausgebildet und eingerichtet, das die maximale Eintauchtiefe der Einsteckhülse 15 definiert.

Vorzugsweise ist das Gegenlageelement 17 - wie in der Zeichnung gezeigt - als vollständig umlaufender Steg ausgebildet. Alternativ kann das Gegenlageelement 17 durch wenigstens einen am Steg oder mehrere stegartige Vorsprünge gebildet sein. Weiter bevorzugt wird das Gegenlageelement 17 durch einen radialen Überstand des Deckelelements 14 selbst gebildet.

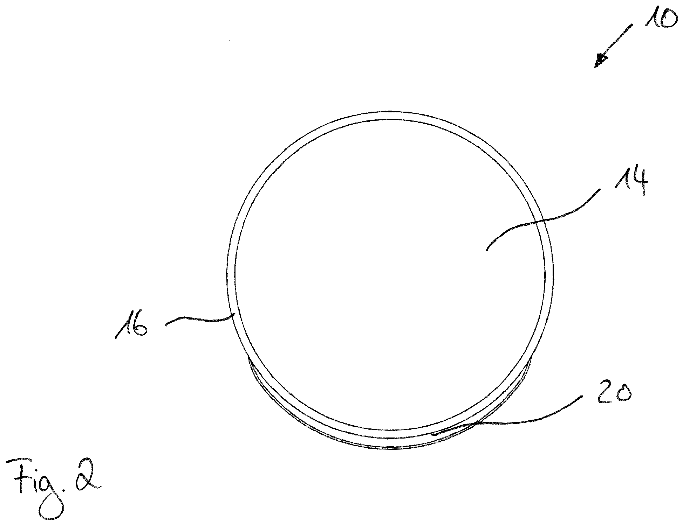

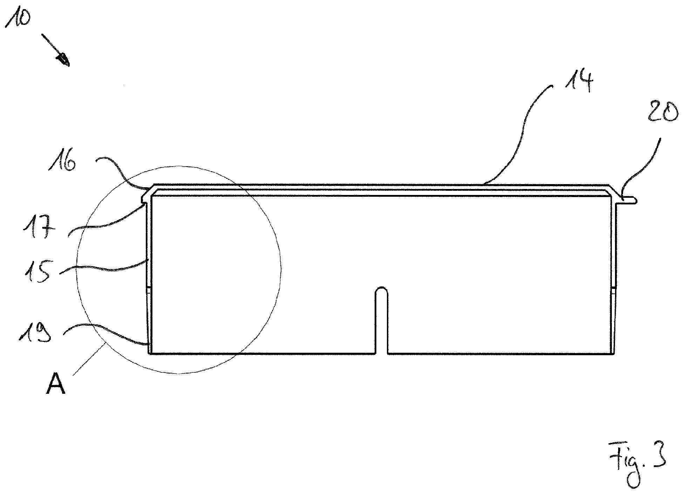

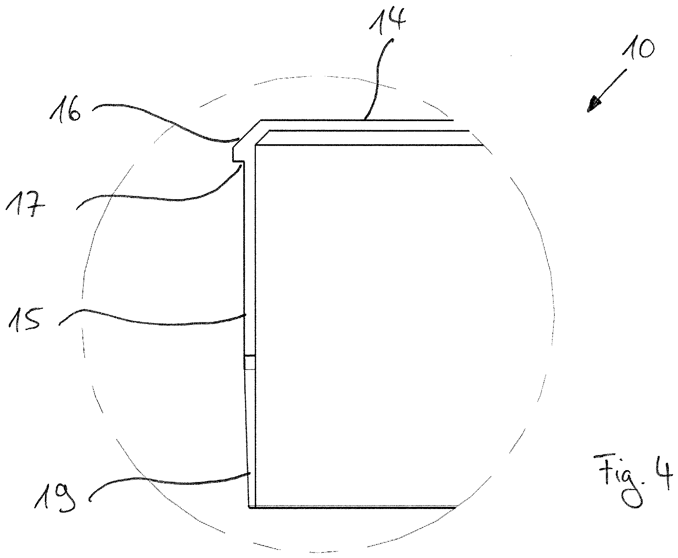

Die zuvor beschriebene Rohrendkappe 10 ist in der Figur 2 als Draufsicht mit Blickrichtung auf das Deckelelement 14 der Rohrendkappe 10 gezeigt, wobei das Deckelelement 14 in der Zeichnung aus Gründen der besseren Übersichtlichkeit transparent dargestellt ist. Weitere Details der erfindungsgemäßen Rohrendkappe 10 sind der Figur 3, die einen Schnitt der in Figur 2 gezeigten Rohrendkappe 10 entlang der Schnittlinie A-A zeigt sowie der vergrößerten Detailansicht des in Figur 3 gezeigten Details A gemäß Figur 4 zu entnehmen.

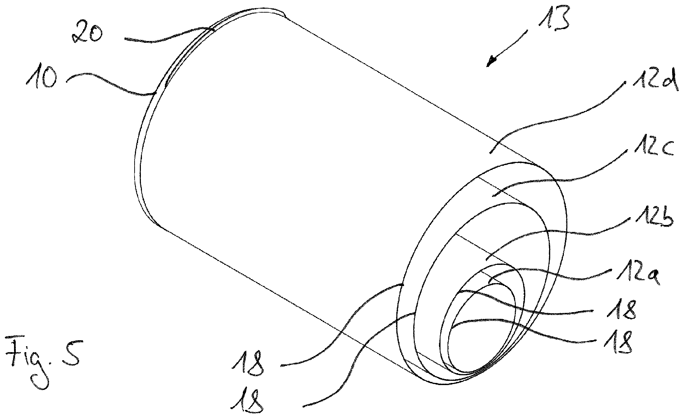

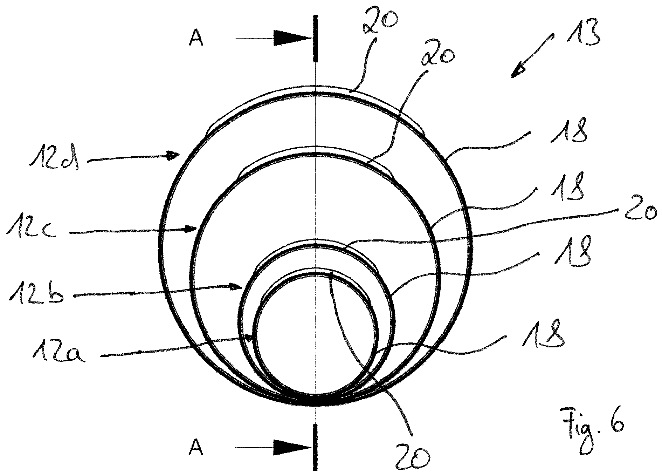

Figur 5 zeigt eine perspektivische Darstellung einer Mehrzahl von ineinandergeschoben angeordneten Rohren 13 sowie Figur 6 eine Draufsicht mit Blickrichtung auf die Stirnseiten 16 der Rohrenden 12.

Vorteilhafter Weise ist die Länge in der axialen Richtung, d.h. in Längsrichtung der Rohre 13, jeweils eines der Übergangsbereiche 16 einer ersten der Rohrendkappen 10 jeweils größer als ein Gesamtüberstand, der von einem der Deckelelemente 14 und einem der Übergangsbereiche 16 einer zweiten der Rohrendkappen 10 der jeweils nächst kleineren Größe gebildet ist. Hierzu wird insbesondere auf die Figur 8 verwiesen, die eine vergrößerte Detailansicht des Details A zeigt, das einen Schnitt entlang der Schnittlinie A-A der Rohre 13 sowie der Rohrendkappen 10 gemäß Figur 6 zeigt.

In den Figuren 7 und 8 ist beispielhaft eine Anzahl von vier Rohren 13 mit den Rohrenden 12 mit jeweils 4 Rohrendkappen 10 gezeigt. Die Rohrendkappen 10 umfassen die Deckelelemente 14a, 14b, 14c, 14d mit den Einsteckhülsen 15a, 15b, 15c, 15d. Die jeweiligen Übergangsbereiche 16a, 16b, 16c, 16d stellen einen Verbindungsbereich zwischen den Deckelelementen 14a, 14b, 14c, 14d und den Einsteckhülsen 15a, 15b, 15c, 15d dar.

Wie insbesondere der Figur 8 zu entnehmen ist, bilden jeweils der Übergangsbereich 16a zusammen mit dem jeweiligen Deckelelement 14a einen Gesamtüberstand, der das jeweilige Rohrende 12 überragt. Der Übergangsbereich 16b der Rohrendkappe 10 der nächsten Größe ist derart ausgebildet, dass dessen Länge in axialer Richtung größer als der genannte Gesamtüberstand ist. Auf diese Weise bildet der Übergangsbereich 16b der jeweiligen Rohrendkappe 10 mit dem Deckelelement 14b einen Aufnahmeraum, in dem die Rohrendkappe 10 der nächst kleineren Größe mit dem Deckelelement 14a, dem Übergangsbereich 16a und der Einsteckhülse 15a rohrendseitig umschlossen ist.

Dieses Prinzip setzt sich in analoger Weise mit den in der Figur 8 gezeigten weiteren Rohrendkappen 10 fort, so dass die Übergangsbereiche 16a, 16b, 16c, 16d der jeweiligen Rohrendkappen 10 mit zunehmend gestufter Größe jeweils entsprechend in axialer Richtung länger ausgebildete Übergangsbereiche 16a, 16b, 16c, 16d umfassen. Mit anderen Worten sind die Übergangsbereiche 16a, 16b, 16c, 16d der Rohrendkappen 10 so eingerichtet, dass die Rohrendkappen 10 ineinander schachtelbar ausgebildet sind.

Die in den Figuren 7 und 8 gezeigte Anzahl von vier Rohren dient lediglich der Veranschaulichung der erfindungsgemäßen Rohrendkappen 10. Die Erfindung ist selbstverständlich nicht auf einen Rohrkappensatz mit vier Rohrendkappen 10 beschränkt, sondern umfasst jede beliebige Rohrkappenanzahl entsprechend der Anzahl der Rohre 13 verschiedenen Durchmessers. Die in den Figuren gezeigte Anzahl von vier Rohrendkappen 10 dient ausschließlich dem Zweck einer besseren Veranschaulichung der vorliegenden Erfindung.

Gemäß einer vorteilhaften Weiterbildung der Erfindung weisen die Einsteckhülsen 15 der Rohrendkappen 10 jeder gestuften Größe Außendurchmesser auf, die jeweils mindestens dem Innendurchmesser des entsprechenden Rohrendes 10 entsprechen. Wie bereits eingangs ausgeführt, sind die jeweiligen Außendurchmesser jeweils geringfügig größer als die entsprechenden Rohrinnendurchmesser gewählt, um die jeweiligen Einsteckhülsen 15 unter Übermaßpassung in den jeweiligen Rohrenden 12 anzuordnen.

Vorteilhafter Weise umfassen die Einsteckhülsen 15 rohrseitig ferner jeweils einen Endabschnitt 19, wobei sich der Endabschnitt 19 zum freien Ende verjüngt. So ist der Außendurchmesser des Endabschnitts 19 zu seinem freien Ende hin jedenfalls geringer gewählt als die Einsteckhülse 15. Zur Verdeutlichung sei auf Figur 8 verwiesen, die exemplarisch den eingangs beschriebenen Rohrkappensatz mit jeweils vier Rohrendkappen 10 zeigt. Wie Figur 8 zu entnehmen ist, sind die jeweiligen Nennweiten der Endabschnitte 19a, 19b, 19c, 19d gegenüber den Nennweiten der Einsteckhülsen 15a, 15b, 15c, 15d reduziert ausgebildet.

Besonders bevorzugt sind die jeweiligen Innnendurchmesser der Endabschnitte 19 so gewählt, dass diese zumindest im Wesentlichen dem Außendurchmesser der jeweiligen Rohrenden 12 entsprechen, nämlich derart, dass der Endabschnitt 19d an der Außenseite des Rohrendes 12c, der Endabschnitt 19c an der Außenseite des Rohrendes 12b und der Endabschnitt 19b an der Außenseite des Rohrendes 12a anliegt. Die Endabschnitte 19 sind folglich als Stütz- und Halteeinrichtung eingerichtet und ausgebildet, da diese sich an dem jeweiligen Rohrende 12 der nächst kleineren Größe durch Anlage abstützen.

Wie eingangs erwähnt ist gemäß einer besonders bevorzugten Ausbildung der Erfindung das Gegenlageelement 17 als radialer Vorsprung ausgebildet und eingerichtet. Mit anderen Worten erstreckt sich das jeweilige Gegenlageelement 17a, 17b, 17c, 17d jeweils in radialer Richtung über die entsprechende Stirnseite 17 des jeweiligen Rohrendes 12a, 12b, 12c, 12d hinaus. Die Gegenlageelemente 17 bilden so einen Anschlag für die Rohrendkappen 10, der die Eintauchtiefe definiert.

Besonders bevorzugt ist zumindest entlang eines Teilbereiches des Umfangs des Deckelements 14 ein Laschenelement 20 angeordnet. Das Laschenelement dient als Handhabungseinrichtung, mittels derer die Rohrendkappe gegriffen und auf diese Weise besonders leicht von dem jeweiligen Rohrende 12 abgenommen werden kann.

Gemäß einer weitere bevorzugten - in der Zeichnung nicht gezeigten - Ausführungsform ist jede der Rohrendkappen 10 bezüglich einer jeweils mittig durch das jeweilige Deckelelement 14 und der die Längsachse der jeweiligen Einsteckhülse 15 bildende Symmetrieachse symmetrisch ausgebildet. Die Symmetrieachse entspricht jeweils der Rohrlängsachse.

Weiter bevorzugt sind das Deckelement 14 sowie die Einsteckhülse 15 bezüglich der jeweils mittig durch das jeweilige Deckelelement 14 und der die Längsachse der jeweiligen Einsteckhülse 15 bildenden Symmetrieachse symmetrisch ausgebildet. An dem Deckelelement 14 ist vorzugsweise zusätzlich das zuvor beschriebene Laschenelement 20 angeordnet.

Gemäß einer besonders bevorzugten Ausbildung der Erfindung sind die Rohrendkappen 10 jeweils einstückig ausgebildet. Das Deckelelement 14, der Übergangsbereich 16 und die Einsteckhülse 15 sind beispielsweise aus einem Formteil aus einem Stück gefertigt. Alternativ sind das Deckelelement 14, der Übergangsbereich 16 sowie die Einsteckhülse 15 stoffschlüssig miteinander verbunden. Weiter bevorzugt sind die Rohrendkappen 10 aus Kunststoffmaterial gefertigt.

Die Erfindung umfasst ferner die eingangs genannte Anordnung, die eine Mehrzahl von ineinander geschoben angeordneten Rohren 13 verschiedenen Rohrdurchmessers umfasst. Die Rohre 13 weisen zumindest im Wesentlichen die gleiche Länge auf, so dass deren Längen entweder gleich sind oder allenfalls um einen geringen Betrag voneinander abweichen. Die ineinander geschobenen angeordneten Rohre 13 sind beispielhaft in Figur 5 veranschaulicht. Die erfindungsgemäße Anordnung weist mindestens einen Rohrkappensatz mit den bereits oben erläuterten Merkmalen auf. Zur Vermeidung von Wiederholungen wird auf die obigen Ausführungen verwiesen. Die Rohrendkappen sind 10 sind endseitig, wie in den Figuren 7 und 8 gezeigt, an den Rohrenden 12 unter Bildung eines Rohrendkappenturmes angeordnet.

Weiter bevorzugt ist an beiden Seiten der Rohrenden 12 jeweils einer der vorgenannten Rohrendkappentürme angeordnet. Auf diese Weise sind die Rohre 12 einerseits beidseitig verschlossen und so vor Beschädigung und Verschmutzung geschützt. Andererseits sind die Rohre 12 ineinandergeschoben gesichert gegen ein Verrutschen angeordnet und stellen so eine platzsparende Transportanordnung dar.

## Patentansprüche

1. Rohrkappensatz (11) umfassend eine Mehrzahl zum Anordnen an Rohrenden (12) von Rohren (13) verschiedenen Rohrdurchmessers ausgebildete und eingerichtete Rohrendkappen (10) gestufter Größen, wobei jede der Rohrendkappen (10) jeweils ein Deckelelement (14) und eine in das jeweilige Rohrende (12) unter Übermaßpassung in axialer Richtung einsteckbar ausgebildete Einsteckhülse (15) umfasst, wobei ein Übergangsbereich (16) zwischen dem Deckelelement (14) und der Einsteckhülse (15) ein Gegenlageelement (17) aufweist, das angepasst ist, im eingeschobenen Zustand der Einsteckhülse (15) mit einer Stirnseite (18) des jeweiligen Rohrendes (12) in Anlage zu kommen.

2. Rohrkappensatz nach Anspruch 1, **dadurch gekennzeichnet, dass** die Länge in der axialen Richtung jeweils eines der Übergangsbereiche (16) einer ersten der Rohrendkappen (10) jeweils größer als ein Gesamtüberstand ist, der von einem der Deckelelemente (14) und einem der Übergangsbereiche (15) einer zweiten der Rohrendkappen (10) der jeweils nächst kleineren Größe gebildet ist.

3. Rohrkappensatz nach einem der Ansprüche 1 oder 2, **dadurch gekennzeichnet, dass** die Einsteckhülsen (15) der Rohrendkappen (10) jeder gestuften Größe Außendurchmesser aufweisen, die jeweils mindestens dem Innendurchmesser des entsprechenden Rohrendes (12) entsprechen.

4. Rohrkappensatz nach einem der Ansprüche 1 bis 3, **dadurch gekennzeichnet, dass** die Einsteckhülsen (15) rohrseitig ferner jeweils einen Endabschnitt (19) umfassen, wobei der Endabschnitt (19) zum freien Ende hin sich verjüngend ausgebildet ist.

5. Rohrkappensatz nach einem der Ansprüche 1 bis 4, **dadurch gekennzeichnet, dass** das Gegenlageelement (17) durch einen radialen Vorsprung gebildet ist.

6. Rohrkappensatz nach einem der Ansprüche 1 bis 5, **dadurch gekennzeichnet, dass** zumindest entlang eines Teilbereiches des Umfangs des Deckelements (14) ein Laschenelement (20) angeordnet ist.

7. Rohrkappensatz nach einem der Ansprüche 1 bis 5, **dadurch gekennzeichnet, dass** jede der Rohrendkappen (10) bezüglich einer jeweils mittig durch das jeweilige Deckelelement (14) und der die Längsachse der jeweiligen Einsteckhülse (15) bildende Symmetrieachse symmetrisch ausgebildet ist.

8. Rohrkappensatz nach einem der Ansprüche 1 bis 7, **dadurch gekennzeichnet, dass** die Rohrendkappen (10) jeweils einstückig ausgebildet sind.

9. Anordnung umfassend eine Mehrzahl von ineinander geschoben angeordneten Rohren (13) verschiedenen Rohrdurchmessers, wobei die Rohre (13) zumindest im Wesentlichen die gleiche Länge aufweisen, und mindestens einen Rohrkappensatz (11) nach einem der Ansprüche 1 bis 8, wobei die Rohrendkappen (10) endseitig an den Rohrenden (12) unter Bildung eines Rohrendkappenturmes angeordnet sind.
